# EUROPEAN PATENT APPLICATION

(11) **EP 2 328 366 A1**
(43) Date of publication of application: **01.06.2011**
(21) Application number: 10191684.9
(22) Date of filing: 18.11.2010
(51) Int. Cl.: H04W 4/14, H04W 4/02

(54) **Method and system for conducting surveys**

(30) Priority: 20.11.2009 IN CH28662009
(71) Applicant: Alcatel Lucent, 75007 Paris (FR)
(72) Inventor: Anand, Surbhi, 110026, Delhi (IN)
(74) Representative: Shamsaei Far, Hassan

(57) **Abstract**

A method and system for conducting survey is provided. The survey is conducted by creating a short messaging service cell broadcast after receiving a request to conduct survey. Thereafter, one or more base station controllers to which the short messaging service cell broadcast has to be sent is identified based on the request. Further, the short messaging service cell broadcast Write-Replace request is sent to one or more base station controllers corresponding to the request received. Further, base station controllers sends a sequence of four short messaging service broadcast request messages or one short messaging service broadcast command message to one or more base transceiver stations corresponding to Write-Replace request received. Subsequently, base transceiver stations sends short messaging service cell broadcast to one or more mobile stations corresponding to the base transceiver stations, and response from the mobile stations is received and processed.

## Description

This invention relates to conducting surveys and, more particularly but not exclusively, to using wireless communication network for conducting surveys.

This section introduces aspects that may be helpful in facilitating a better understanding of the invention. Accordingly, the statements of this section are to be read in this light and are not to be understood as admissions about what is in the prior art or what is not in the prior art.

It has been a popular practice followed by many to use statistical survey (hereinafter referred to as, survey) as a mechanism to understand the mind set of consumers with respect to products, services, or issues, among others. Generally companies use survey as an instrument to understand consumer perception of the company's products or services. Survey may also be used to understand consumer perception relating to competing products, or new products. Further, survey has been a popular mechanism used to understand public perception on issues of interest.

Survey can be broadly defined as a method of collecting information from respondents, generally by receiving answers to questions, from the respondents. The information collected from the respondents is analyzed. In some cases, the result of the analysis may facilitate decision making.

Traditionally, surveys are conducted by asking respondents a set of questions and collecting answers to the same. The questions are asked by meeting the respondents in person and posing the questions at the respondents, or by making telephone calls to the respondents and asking the questions, or by providing a hard copy of a questionnaire to the respondents and collecting answers to the questions in the questionnaire. In all the above discussed methods, surveyors are required to pose questions at the respondents, which add up to the cost of conducting the survey. Further, if the survey has to cover a large number of respondents, then greater amount of time will be required to conduct the survey using the above methods.

Another technique of conducting survey is by emailing questionnaires to respondents. In this method, human intervention is considerably reduced as compared to the previously discussed methods. However, it has been observed that such emails that are sent as part of mass emailing campaigns have high probability of being marked as spam, and hence the respondents might not even read such emails. Further, respondents might not respond to such emails due to lack of incentive to respond. Further, even if an incentive mechanism is proposed in the email, the respondents might be skeptical about the credibility of the entity which has sent the email. Further, collecting email addresses which would be relevant to the survey is also a tedious job, which is time consuming and also involves substantial costs.

Another technique being used in the recent years to conduct surveys is, using television as a medium to conduct surveys. In this technique, a question or an issue is broadcasted, and the viewers are provided options as answers. The viewers may select an option and send a Short Messaging Service (SMS), in which an option is picked, to a number. For example, a question such as, who is the best US president among Barack Obama, Bill Clinton and George W. Bush, may be broadcasted on televisions. Further, the viewers are asked to select one of the options by sending an SMS by typing "A" if the answer is Barack Obama, "B" if the answer is Bill Clinton and "C" if the answer is George W. Bush. The SMS is sent to a short code, such as 8888. This technique may not be best suited for posing multiple questions to the viewers at the same time. If multiple questions are broadcasted at the same time, then the viewers may not be able to remember all the questions and the options provided as answers. Hence, this method may not be suited for surveys for which answers to multiple questions are required. Further, in this technique, the target audience of the survey may be a small portion of the viewers of the questions being broadcasted.

Accordingly the invention provides a method for conducting survey. The method includes, creating a Short Messaging Service Cell Broadcast (SMSCB) after receiving a request to conduct survey. Thereafter, one or more Base Station Controllers (BSC's) to which the SMSCB has to be sent is identified based on the request. Further, the SMSCB request is sent to the identified BSC's. Base Station Controllers (BSC's) sending a sequence of four short messaging service broadcast requests(4 SMS BROADCAST REQUESTS) or one short messaging service broadcast command(SMS BROADCAST COMMAND) to some or all base transceiver stations(BTS) corresponding to the identified base station controllers(BSC). Subsequently, short messaging service cell broadcast (SMSCB) is sent to all mobile stations corresponding to the base transceiver stations and response from the mobile stations is received.

There is also provided a system for conducting survey. The system includes a mobile survey service module configured to receive a request to conduct a survey and create a short messaging service cell broadcast corresponding to the survey. Further, the mobile survey service module configured to, identify one or more base station controllers to which the short messaging service cell broadcast has to be sent based on the request, send the short messaging service cell broadcast Write-Replace request to the identified base station controllers and receive the Report-Success from base station controllers after they successfully transmit the SMS BROADCAST COMMAND or SMS BROADCAST REQUESTS to their respective base transceiver stations. Mobile survey service also receives responses of the survey from mobile stations.

There is also provided a system for conducting survey. The system includes a mobile survey service module configured to receive a request to conduct a survey and create a short messaging service cell broadcast corresponding to the survey. Further, the mobile survey service module configured to, identify one or more base station controllers to which the short messaging service cell broadcast has to be sent based on the request, send the short messaging service cell broadcast request to the identified base station controllers and receive response to the survey from mobile stations.

These and other aspects of the embodiments herein will be better appreciated and understood when considered in conjunction with the following description and the accompanying drawings.

Some embodiments of apparatus and/or methods in accordance with embodiments of the present invention are now described, by way of example only, and with reference to the accompanying drawings, in which:
FIG. 1 is a block diagram illustrating a system for conducting surveys, in accordance with an embodiment;
FIG. 2 (a and b) is a flow diagram illustrating a method for conducting survey, in accordance with an embodiment; and
FIG. 3 is a flow diagram illustrating a method for conducting survey, in accordance with an embodiment.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

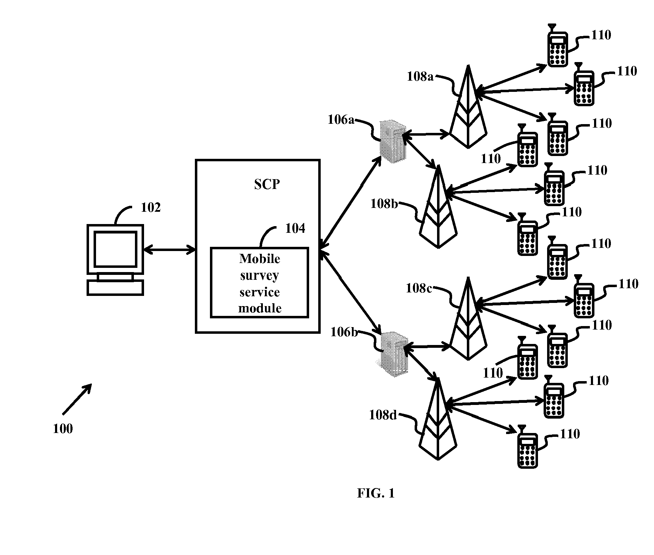

The embodiments herein achieve a method for conducting statistical survey (hereinafter referred to as survey) using wireless communication network. Referring now to the drawings, and more particularly to FIGS. 1 through 3, where similar reference characters denote corresponding features consistently throughout the figures, there are shown embodiments.

FIG. 1 is a block diagram illustrating a system 100 for conducting survey, in accordance with an embodiment. System 100 includes a Data Processing System (DPS) 102, a Mobile Survey Service Module (MSSM) 104, plurality of Base Station Controllers (BSC) 106, plurality of Base Transceiver Stations (BTS) 108 and Mobile Stations (MS) 110. It may be noted that, based on the context, the abbreviation BSC means Base Station Controller or Base Station Controllers, the abbreviation BTS means Base Transceiver Station or Base Transceiver Stations, and abbreviation MS means Mobile Station or Mobile Stations.

The DPS 102 can be a computer that is configured to communicate with the MSSM 104. The DPS 104 is further configured to receive inputs which may be used for conducting the survey. The inputs may include the questions to be asked in the survey, and a list of areas or jurisdiction in which the survey has to be conducted. The DPS 102 may be a computer which is associated with a telecommunication service provider. The telecommunication service provider may provide inputs to the DPS 102. The input provided to the DPS 102 is used to send a survey request to the MSSM 104.

MSSM may be residing on Service Control Point (SCP), also known as Intelligent Network (IN) is a wireless communication network element. The MSSM 104 is capable of communicating with the DPS 102 and BSC 106. In an embodiment, the MSSM104 is configured to receive survey request from the DPS 102 and generate a Short Messaging Service Cell Broadcast (SMSCB) corresponding to the request. SMSCB is defined within Phase 2 of the GSM standard in GSM 03.49. Additionally, up to 15 SMSCB messages can be concatenated. An SMSCB message may include the survey questions and numbers to which response to the questions is expected to be sent. The MSSM 104 is further configured to send SMSCB to BSC 106 that serve to areas that are relevant to the survey. The MSSM 104 identifies BSC 106 that are relevant to the survey by accessing and processing a list comprising area codes and corresponding BSC 106 serving the area. This list comprising of area codes and the service BSC's may be maintained at MSSM 104. The MSSM 104 uses the area codes specified in the survey request and identifies the relevant BSC 106 using this list. Further, a cell broadcast centre (CBC), which is an entity within a wireless communication network may send SMSCB to BSC. Further, in an embodiment, the MSSM 104 is configured to send the SMSCB to the BSC 106 by emulating a cell broadcast centre. The wireless communication network entity CBC may not be used in embodiments. The MSSM 104 creates SMSCB and sends a Write-Replace request to the relevant BSC 106. The Write-Replace request is composed of SMSCB and other relevant information for transmission of SMSCB. The MSSM 104 is further configured to, receive responses to the survey and process the responses. MSSM 104 is also configured to receive Report-Success or Report-Failure messages from BSC's 106 and take appropriate action of resending the Write-Replace request to BSC 106 which has not sent the Report-Success message back to MSS 104.

A Base Station Controller 106 controls and supervises a number of Base Transceiver Stations 108. A Base Station Controller 106 is typically the intelligence behind the Base Transceiver Stations 108. Generally a BSC 106 has several BTSs 108 under its control. The BSC 106 handles allocation of radio channels, receives measurements from the mobile stations 110, and controls handovers from BTS 108 to BTS 108. Each of the BSC 106 is further configured to generate a sequence of 4 SMS BROADCAST REQUEST messages or 1 SMS BROADCAST COMMAND message in response to the Write-Replace command sent by the MSS 104. Furthermore, the sequence of 4 SMS BROADCAST REQUEST messages or 1 SMS BROADCAST COMMAND message that are generated are sent to one or more BTS 108 controlled by the BSC 106 depending on the Cell List sent in Write-Replace command by MSS 104.

A base transceiver station 108 includes antenna and radio equipment enabling wireless communication with Mobile Station 110. Each BTS 108 covers a defined area/jurisdiction, known as a cell. A BTS 108 is under control of a BSC 106. Each of the BTS 108 is configured to receive sequence of 4 SMS BROADCAST REQUEST messages or 1 SMS BROADCAST COMMAND message from a BSC 106 and in turn send SMSCB in a sequence of 4 blocks each 22 octets long to MS 110 that are in an area which is being served by the BTS 108. Each of the BTS 108 is configured to send the SMSCB to the MS 110 using Cell Broadcast Channel (CBCH)

Mobile Stations (MS) 110 are devices used by mobile users to access wireless network. Each of the MS 110 typically includes mobile telephone equipment and a Subscriber Identity Module. Examples of MS include, but are not limited to, mobile phones, personal digital assistants and smart phones. At any point of time, a MS 110 is served by a BTS 108. Each of the MS 110 is configured to communicate with the BTS 108 that is serving the MS 110. Further, each of the MS 110 is configured to receive the SMSCB sent by the BTS 108. Further, the MS 110 is enabled to allow a user of the MS 110 to respond to the SMSCB.

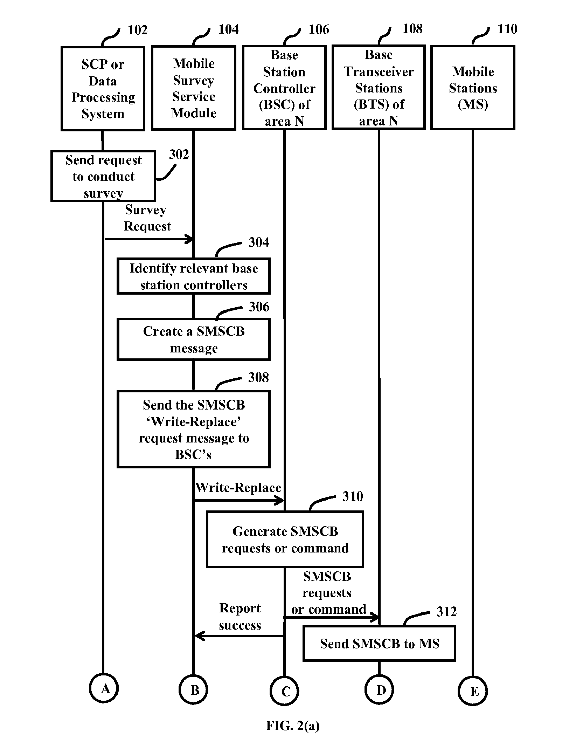

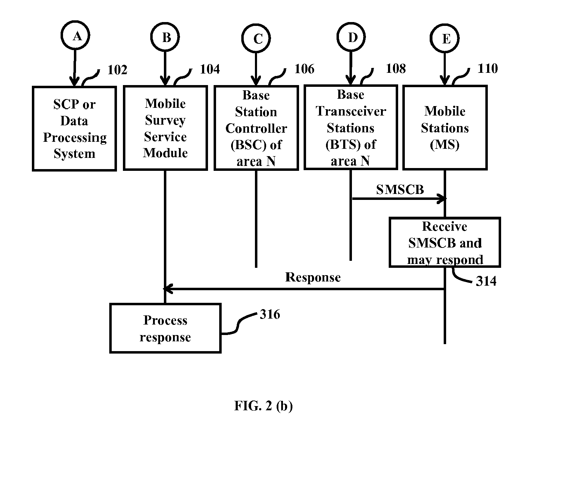

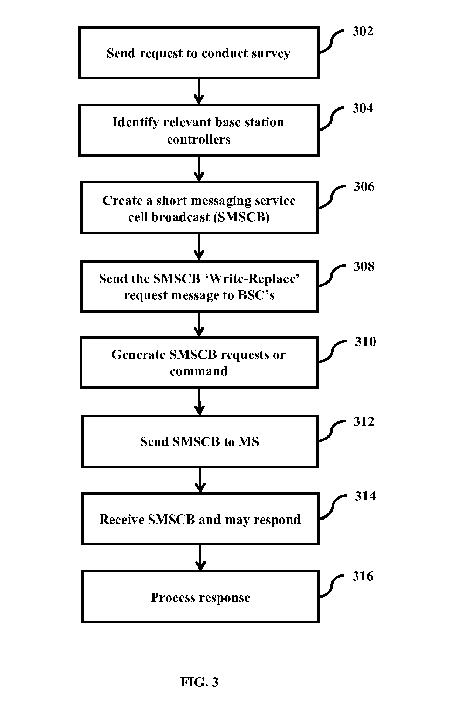

FIGs. 2a, 2b and 3 are flow diagrams illustrating a method for conducting survey, in accordance with an embodiment. The survey process is initiated by providing input required for conducting a survey to the MSSM 104. The input may include one or more questions to be asked in the survey, and a list of areas codes or jurisdiction codes in which the survey has to be conducted at step 302. Thereafter, at step 304, the MSSM 104 identifies BSC 106 that are relevant to the survey by accessing and processing a list comprising area codes and corresponding BSC 106 serving the area. This list is maintained by MSSM 104. The MSSM 104 uses the area codes specified in the survey request and identifies the relevant BSC 106 by using the list. Additionally, at step 306, the MSSM 104 generates a SMSCB corresponding to the survey request received from the DPS 102. Subsequently, at step 308, the MSSM 104 sends SMSCB Write-Replace commands to the relevant BSCs 106. In an embodiment, the MSSM 104 sends a SMSCB to the relevant BSC 106 by emulating a cell broadcast centre and sending a Write-Replace request to the relevant BSC 106. The BSC 106 after receiving the SMSCB command from the MSSM 104 generates a sequence of 4 SMS BROADCAST REQUEST messages or 1 SMS BROADCAST COMMAND message, at step 310. In an embodiment, the BSC 106 generates a sequence of 4 SMS BROADCAST REQUEST messages or 1 SMS BROADCAST COMMAND message in response to the Write-Replace command sent by the MSSM 104. Furthermore, a sequence of 4 SMS BROADCAST REQUEST messages or 1 SMS BROADCAST COMMAND message that is generated is sent to BTS 108 that is controlled by the BSC 106. The BTS 108 after receiving the a sequence of 4 SMS BROADCAST REQUEST messages or 1 SMS BROADCAST COMMAND message from the BSC 106 send SMSCB to the MS 110 that are present in the area/jurisdiction which they are serving, at step 312. In an embodiment, the BTS 108 sends SMSCB to MS 110 in a sequence of 4 blocks each 22 octets long. In an embodiment, the BTS 108 sends the SMSCB to the MS 110 using Cell Broadcast Channel (CBCH). The SMSCB sent by the BTS 108 is received by the MS 110 at step 314. Further, at step 314, users of the MS 110 may respond to the survey by providing response to the number sent in SMSCB. The response provided by the users of the MS 110 is provided to the MSSM 104. The MSSM 104 processes the response provided by the users of the MS 110, at step 314. The MSSM 104 is configured to process the response to generate information that may be used by an entity that could use the result of the survey.

A survey may be conducted to identify brand strength of car companies, such as, Toyota, Chevrolet and Honda, in Bangalore (a city in India) and Delhi (a city in India). To conduct this survey, area codes of Bangalore and Delhi are provided as input to the MSSM 104. Additionally, a question such as, *"Which car company has the best range of cars? (a) Toyota (b) Chevrolet (c) Honda"* may be provided as input to the MSSM 104. The input is used to generate a survey request which is sent to the MSSM 104. The MSSM 104 accesses a list which comprises listing of area codes and corresponding BSC 106 that serve each of the areas, and determines BSC 106 that are serving the area whose area codes are provided in the survey request. Additionally, the MSSM 104 creates a SMSCB corresponding to the survey request. The SMSCB includes the survey question and a short code, such as 8888, to which the response to the survey is expected to be sent. Subsequently, the MSSM 104 emulates a cell broadcast centre and sends a SMSCB Write-Replace command to the relevant BSC 106. On receiving the Write-Replace command, the BSC 106 generates a sequence of 4 SMS BROADCAST REQUEST messages or 1 SMS BROADCAST COMMAND message and sends it to the BTS 108 that is controlled by the BSC 106. Subsequently, the BTS 108 sends SMSCB to the MS 110 that are in the area they are serving via CBCH. The SMSCB received by the MS 110 may have the following content:
*"Which car company has the best range of cars? (a) Toyota (b) Chevrolet (c) Honda. Send your answer by sending an SMS with your answer to 8888 ".* The users of the MS 110 may respond to the survey by sending SMS with their answers to 8888. The MSSM 104 accesses the answers sent by the users and processes the same. The MSSM 104 may process the answer to provide information such as, users choice in different age groups, popularity of the car brands among different genders, popularity of the car brands based on location, among other information that can be provided. This information that is generated by the MSSM 104 may be provided to the entity who may wish to use the result of the survey.

A person of skill in the art would readily recognize that steps of various above-described methods can be performed by programmed computers. Herein, some embodiments are also intended to cover program storage devices, e.g., digital data storage media that are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIG. 1, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for conducting survey, the method comprising:
- creating a short messaging service cell broadcast, by mobile survey service module, after receiving a request to conduct survey;
- identifying by the mobile survey service module, one or more base station controllers to which the short messaging service cell broadcast has to be sent, based on the request;
- sending the short messaging service cell broadcast request to the identified base station controllers;
- sending short messaging service broadcast requests or short messaging service broadcast command to one or more base transceiver stations corresponding to the identified base station controllers, wherein the service broadcast requests or short messaging service broadcast command results from the request received by the base station controller;
- sending short messaging service cell broadcast to one or more mobile stations corresponding to the base transceiver stations; and
- receiving response from the mobile stations.

2. The method according to claim 1, wherein the request to conduct the survey comprises questions to be asked in the survey and codes corresponding to areas where the survey has to be conducted.

3. The method according to claim 2, further comprising, providing information corresponding to incentive offered for participating in the survey.

4. The method according to claim 1 comprises providing information corresponding to criteria for selecting the base station controllers and the base transceiver stations for sending the short messaging service cell broadcast.

5. The method according to claim 1, wherein identifying the base station controllers comprises, identifying base station controllers serving areas in which survey has to be conducted, wherein the mobile survey service module comprises a list of area codes and corresponding base station controllers serving each of the areas.

6. The method according to claim 1, wherein sending the short messaging service cell broadcast request to the identified base station controllers , comprises, mobile survey service module emulating cell broadcasting centre and sending the short messaging service cell broadcast WRITE-REPLACE request to the base station controllers.

7. The method according to claim 1, wherein sending the short messaging service broadcast requests or short messaging service broadcast command comprises, sending a sequence of four short messaging service broadcast request messages or one service broadcast command message to one or more base transceiver stations.

8. The method according to claim 1, further comprises, sending a Report-Success message to mobile survey service module after sending the short messaging service broadcast requests messages or short messaging service broadcast command messages.

9. The method according to claim 1, wherein, sending the short messaging service cell broadcast to one or more mobile stations, comprises, sending the short messaging service cell broadcast using base transceiver station mobile interface through cell broadcast channel.

10. The method according to claim 1, wherein, sending the short messaging service cell broadcast to the mobile stations comprises, sending the short messaging service cell broadcast in four blocks, wherein each of the four blocks is twenty two octets long.

11. The method according to claim 1, further comprising, processing the response received from the mobile stations based on information desired to be extracted from the survey.

12. A system for conducting survey, the system comprising:
- a data processing system configured to send a request to conduct a survey;
- a mobile survey service module configured to:
- receive the request from the data processing system;
- create a short messaging service cell broadcast;
- identify one or more base station controllers to which the short messaging service cell broadcast has to be sent based on the request;
- send the short messaging service cell broadcast request to the identified base station controllers; and
- receive response to the survey from mobile stations;
- plurality of base station controllers, wherein each of the base station controllers is configured to:
- generate short message service broadcast requests or short messaging service broadcast command from the request received from the mobile survey service module; and
- send short messaging service broadcast requests or short messaging service broadcast command to one or more corresponding base transceiver stations; and
- plurality of base transceiver stations, wherein each of the base transceiver stations are configured to send short messaging service cell broadcast to at least a part of mobile stations corresponding to the base transceiver station.

13. The method according to claim 12, wherein the mobile survey service module is configured to identify the base station controllers serving areas in which the survey has to be conducted using a list of area codes and corresponding base station controllers serving each of the areas.

14. The method according to claim 12, wherein the mobile survey service module is configured to send the short messaging service cell broadcast request to the identified base station controllers by emulating cell broadcasting centre and sending the short messaging service cell broadcast write-replace request to the base station controllers.

15. The method according to claim 12, wherein each of the base transceiver stations is configured to send the short messaging service cell broadcast using base transceiver station mobile interface through cell broadcast channel.

16. A system for conducting survey, the system comprising:
- a mobile survey service module configured to:
- receive a request to conduct a survey;
- create a short messaging service cell broadcast corresponding to the survey;
- identify one or more base station controllers to which the short messaging service cell broadcast has to be sent based on the request;
- send the short messaging service cell broadcast Write-Replace request to the identified base station controllers; and
- receive response to the survey from mobile stations.

17. The system according to claim 16, wherein each of the base station controllers is configured to:
- generate short message service broadcast requests or short messaging service broadcast command from the request received from the mobile survey service module; and
- send short messaging service broadcast requests or short messaging service broadcast command to one or more corresponding base transceiver stations.

18. The system according to claim 17, wherein each of the base transceiver stations is configured to send short messaging service cell broadcast to at least a part of mobile stations corresponding to the base transceiver station.

19. A method substantially as herein above described in the specification with reference to the accompanying drawings.

20. A system substantially as herein above described in the specification with reference to the accompanying drawings.
